# EUROPEAN PATENT SPECIFICATION

(11) **EP 1 119 181 B1**
(45) Date of publication and mention of the grant of the patent: **27.07.2005**
(21) Application number: 00311634.0
(22) Date of filing: 22.12.2000
(51) Int. Cl.: H04N 1/21, H04N 1/32, H04N 1/327, H04N 1/00

(54) **Method and apparatus for effectively handling data received**
Verfahren und Gerät zur effizienten Verarbeitung von empfangenen Daten
Méthode et appareil pour le traitement efficace de données reçues

(30) Priority: 28.12.1999 JP 37214899
(43) Date of publication of application: 25.07.2001
(73) Proprietor: Ricoh Company, Ltd., Tokyo 143-8555 (JP)
(72) Inventor: Fujii, Takanori, c/o Ricoh Company, Ltd., Tokyo 143-8555 (JP)
(74) Representative: Leeming, John Gerard

(56) References cited:
- US-A- 5 224 156
- US-A- 5 696 600
- US-A- 5 995 240
- US-A- 5 995 242

## Description

The present invention relates to a method and apparatus for data communication, and more particularly to a method and apparatus for data communication that can effectively handle data received.

In conventional communications terminals such as Group-3 facsimile machines, some calling facsimile machines are configured to notify a called facsimile machine of an identification number composed of a few digits during a data transmission using a control signal such as a NSS (non-standard facilities set-up) signal or a NSF (non-standard facilities) signal when such an identification number is entered during a transmission operation.

Since a sub-address signal SUB is defined as an option signal by the recommendations T-30 of ITU-T (International Telecommunication Union -T), it becomes possible for a calling terminal to notify a called terminal of an identification number by sending it using SUB together with transmission data. Accordingly, communications between machines produced by different manufactures become possible.

The identification number sent with the communications data from the calling terminal is needed to be interpreted by the called terminal. In general, the called terminal is provided with an idea of information boxes corresponding to the respective identification numbers on a one-to-one basis, wherein each box is associated with a specific operation. When the called terminal receives data, the received data is stored in association with a certain box specified by the identification number sent with the data and is stored in a memory. Afterward, a specific operation registered in a box will be performed against the received data stored in the memory in association with the above-mentioned box. For example, the received data in association with a box can be reproduced only when an encrypted number is entered.

The above-mentioned technique is also used in a message distribution system for a network. For example, each box is configured to specify a certain E-mail address and the received data in association with a box can be transferred to a destination terminal via the connected network based on the E-mail address specified by the corresponding box.

Further, the above-mentioned technique is used in a message transfer system. For example, each box is configured to specify a certain transfer address and the received data in association with a box can be transferred to a destination terminal based on the transfer address specified by the corresponding box.

Further, the above-mentioned technique is used in a mail board system. For example, the received data in association with a box can be transmitted to a terminal upon a time when this terminal notifies the identification number specifying the box using a selective poling signal SEP.

However, the above-mentioned technique only allows a calling terminal but not a called terminal to perform an operation for designating a box. Under this circumstance, it is not possible for a called terminal to determine the nature of the received data and to store the received data into a box uniquely determined by the called terminal in accordance with the nature of the received data. If a called terminal performs a box designating operation, it is problematic. This is because two different boxes may be designated by the calling and called terminals.

Moreover, the above-mentioned technique cannot be used in a case where the calling terminal is not capable of performing the box designation function.

The prior art can be identified by US-A-5224156 and US-A-5995242.

US5224156 describes a system for sending messages from a first location to a second location, and the recipient can select a forwarding feature (valid for all incoming messages) in advance.

US5995242 describes a facsimile transmission method where the called party can transmit information describing its capabilities to the calling party before proceeding with the standard handshaking procedure. In this way part of the said handshaking procedure can be omitted, if certain conditions are satisfied.

The present invention provides a novel communications terminal connected to a communications network. In one example, a novel communications terminal includes a communications mechanism, a first memory, a second memory, a number detection mechanism, and a controlling mechanism. The communications mechanism is configured to respond to a call initiation made by a calling communications terminal connected to the communications network and, after such a response, to perform a communications operation through a predetermined communications procedure relative to the calling communications terminal. The first memory stores communications data sent from the calling communications terminal during the communications operation. The communications data is provided with a file number for specifying the communications data. The second memory stores a plurality of information boxes. Each information box includes a box number field that previously registers a box number for identifying a box, a file number field that registers a file number specifying communications data sent from the calling communications terminal in association with the box, and a task information field that previously registers data representing a specific operation to be performed against the communications data specified by the file number. The box number is notified during the call initiation by the calling communications terminal using a signal for normally notifying a called party number. The number detection mechanism is configured to detect a called party number sent from the calling communications terminal during the call initiation. The controlling mechanism is configured to verify the called party number sent from the calling communications terminal during the call initiation with box numbers throughout the plurality of information boxes stored in the second memory so as to determine whether the called party number matches with one of the box numbers. The controlling mechanism is further configured to perform, when the called party number is determined as matching with one of the box numbers, the specific operation registered in the task information field of a box specified by the one of the box numbers matched with the called party number against communications data specified by the file number associated with the box and which is stored in the first memory.

The controlling mechanism may notify the calling communications terminal during the predetermined communications procedure after the call initiation that a communications operation involving a box designation process is not available when the called party number is determined as not matching with one of the box numbers, so as to prohibit an in-band box designation during the predetermined communications procedure by the calling communications terminal.

The controlling mechanism may notify the calling communications terminal during the predetermined communications procedure after the call initiation that a communications operation involving a box designation process is not available when the called party number is determined as matching with one of the box numbers, so as to prohibit an overlapping of box designation designated during the call initiation and during the predetermined communications procedure.

The called party number may include a dial-in number or a sub-address of an integrated services digital network.

The predetermined communications procedure may include a Group-3 facsimile communications procedure or a Group-4 facsimile communications procedure.

The communications network may include a public switched telephone network, an integrated services digital network, or a local area network.

The present invention further provides a novel method for data communications. In one example, a novel method for data communications includes the steps of registering, detecting, verifying, storing, providing, registering, and performing. The registering step registers a plurality of information boxes. Each information box includes a box number field that previously registers a box number for identifying a box, a file number field that registers a file number for specifying communications data, and a task information field that previously registers data representing a specific operation to be performed against communications data specified by the file number. The detecting step detects a called party number during a call initiation made through a communications network by a calling communications terminal connected to the communications network. The verifying step verifies the called party number sent from the calling communications terminal during the call initiation with box numbers throughout the plurality of information boxes so as to determine whether the called party number matches with one of the box numbers. The storing step stores communications data received during a communications operation through a predetermined communications procedure subsequent to the call initiation made by the calling communications terminal. The providing step provides the communications data stored by the storing step with a file number when the called party number is determined as matching with one of the box numbers. The registering step registers the file number provided by the providing step into the file number field of a box specified by the one of the box numbers. The performing step performs the specific operation registered in the task information field of the box specified by the one of the box numbers matched with the called party number against communications data specified by the file number registered by the registering step.

The present invention further provides a novel computer readable medium storing computer instructions for performing the steps recited in the above-mentioned novel method for data communications.

A more complete appreciation of the present application and many of the attendant advantages thereof will be readily obtained as the same becomes better understood by reference to the following detailed description when considered in connection with the accompanying drawings, wherein:
Fig. 1 is a schematic block diagram of a facsimile apparatus according to an embodiment of the present invention;
Fig. 2 is an illustration for showing contents of RAM included in the facsimile apparatus of Fig. 1;
Fig. 3 is an illustration for showing contents of an image memory included in the facsimile apparatus of Fig. 1;
Fig. 4 is an illustration for showing contents of an image information file stored in the image memory of Fig. 3;
Fig. 5 is an illustration for showing contents of a box management table stored in the RAM of Fig. 2;
Fig. 6 is an illustration for showing a predetermined facsimile communications procedure performed by the facsimile apparatus of Fig. 1;
Figs. 7 - 9 are flowcharts for explaining an exemplary facsimile receiving operation performed by the facsimile apparatus of Fig. 1 with a verification of a called party number; and
Figs. 10 and 11 are flowcharts for explaining an exemplary file management operation performed by the facsimile apparatus of Fig. 1.

In describing preferred embodiments illustrated in the drawings, specific terminology is employed for the sake of clarity. However, the invention is not intended to be limited to the specific terminology so selected and it is to be understood that each specific element includes all technical equivalents which operate in a similar manner.

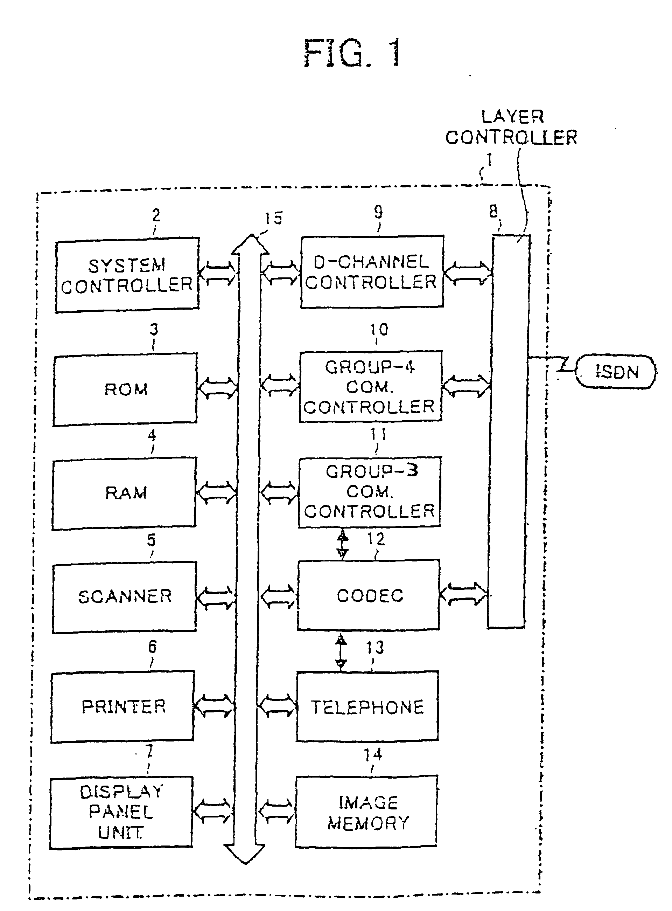

Referring now to the drawings, wherein like reference numeral designate identical or corresponding parts throughout the several views, particularly to Fig. 1, a facsimile apparatus 1 according to an embodiment of the present invention is described. Fig. 1 shows a block diagram of the facsimile apparatus 1 which includes a system controller 2, a ROM 3, a RAM 4, a scanner 5, a printer 6, a display panel unit 7, a layer controller 8, a D-channel controller 9, a Group-4 communications controller 10, a Group-3 communications controller 11, a CODEC (coder/decoder) 12, a telephone, 13, an image memory 14, and an internal bus 15.

The system controller 2 controls the operations of the facsimile apparatus 1, including a facsimile data transmission control for transmitting and receiving image information and arbitrary data files according to a predefined communications procedure (i.e., Group-3, Group-4 facsimile communications procedures). The ROM (read only memory) 3 includes an electrically reprogrammable read only memory (i.e., a flash ROM) and stores control (or application) programs to be executed by the system controller 2.

The RAM (random access memory) 4 of Fig. 1 includes a working memory area reserved for use by the system controller 2. The scanner 5 reads an image of a document at one of predetermined image reading resolutions (i.e., 200-pixel by 200-pixel per inch, 300-pixel by 300-pixel per inch, 400-pixel by 400-pixel per inch, etc.). The printer 6 produces an image output at a predefined print resolution at one of predetermined resolutions (i.e., 200 dpi, 300 dpi, 400 dpi, etc.) based on image data obtained either through an operation a facsimile receiving or original image scanning operation with the scanner 5.

The display panel unit 7 includes various kinds of operational keys, such as ten numerous keys for entering telephone numbers to call, a start key, a stop key, one-touch-dialing keys for entering a telephone number in a corresponding short-cut number, etc., as well as a display (i.e., a liquid crystal display) for indicating various messages to users such as an operating status of the facsimile apparatus 1 and so on.

The layer controller 8 controls a communications operation for transmitting to and receiving a frame on a layer 1 from the ISDN and procedures for activating and inactivating the layer 1. The D-channel controller 9 controls protocols associated with layers 2 and 3 of a D-channel, and more particularly a transmission operation for transmitting a LAPD frame on the layer 2 and a call operation for starting a call connection and terminating the call connection on the layer 3.

The Group-4 communications controller 10 controls a Group-4 communications operation performed with a different Group-4 facsimile apparatus on a B-channel which is established by the D-channel controller 9. The Grou-3 communications controller 11 controls a Group-3 communications operation performed with a different Group-3 facsimile apparatus on a B-channel which is established by the D-channel controller 9.

The CODEC 12 interfaces between the Group-3 communications controller 11 and the layer-1 controller 8 and between the telephone 13 and the layer-1 controller 8. More specifically, the CODEC 12 converts digital signals on the B channel received from the layer-1 controller 8 into analog signals and inputs the analog signals to the Group-3 communications controller 11 or to the telephone 13, and vice versa.

The telephone 13 may be the one specifically designed for the facsimile apparatus 1, including a special connection for that purpose, or the one designed for the PSTN, including an interface for the PSTN. The image memory 14 temporarily stores image information to be transmitted to and which are sent from other facsimile terminals. The above-described various units of the facsimile apparatus 1 communicate with each other through the respective connections to the internal bus 15, as shown in Fig. 1.

The thus-configured facsimile apparatus 1 obtains image information from an original document with the scanner 5 and transmits it to a different facsimile machine on the B-channel set by the Group-3 controller 9 with the Group-3 communications controller 11 or the Group-4 communication controller 10 depending upon the type of the different facsimile machine specified by a telephone number entered through the display panel 7. Also, the facsimile apparatus 1 receives image information from a different facsimile machine via the ISDN with the Group-3 communications controller 11 or the Group-4 communication controller 10 depending upon the type of the different facsimile machine and outputs an image on a recording sheet in accordance with the received image information. Further, the facsimile apparatus 1 performs a communications operation with the telephone 13 on the B-channel set by the D-channel controller 9.

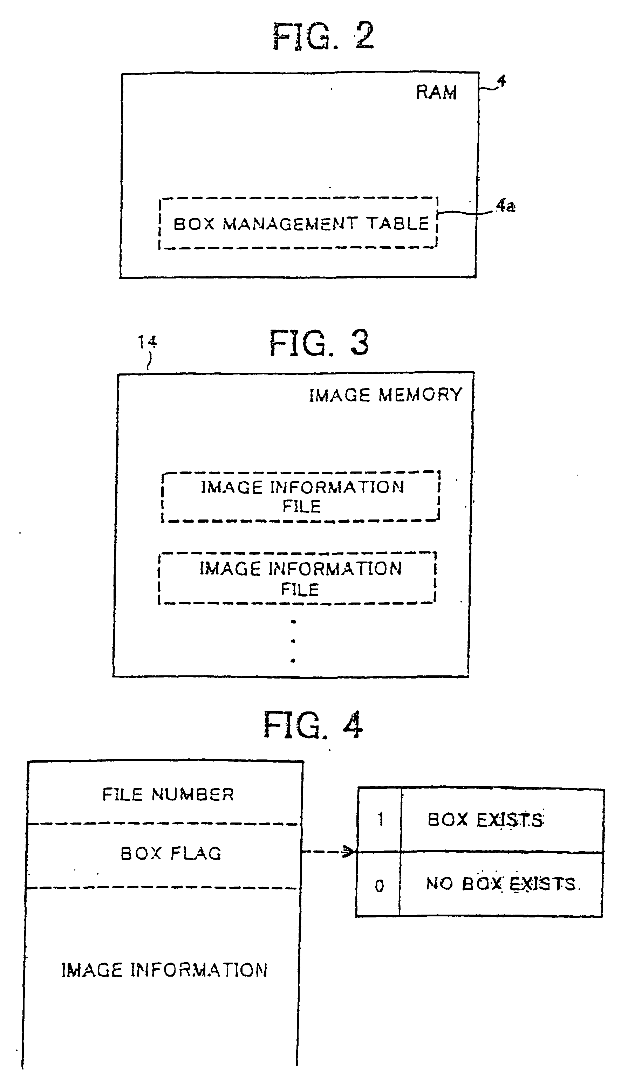

As shown in Fig. 2, the thus-configured facsimile apparatus 1 is provided with a box management table 4a (explained later), as a data table, in the RAM 4.

In the facsimile apparatus 1, image information files are stored in the image memory 14, as shown in Fig. 3. Each image information file stored in the image memory 14 includes a file number, a box flag, and an image body, as shown in Fig. 4. The file number is a four-digit number, for example, for identifying each image information file. An image information file is given a file number when stored in the image memory 14 and the following image information file is given a file number which is incremented by 1 so that each image information file has a unique file number in the image memory 14. The box flag is associated with a specific box and indicates a status whether a corresponding box exists. When the box flag is 1 it indicates that a corresponding box exists, and when the box flag is 0 it indicates that no corresponding box exists.

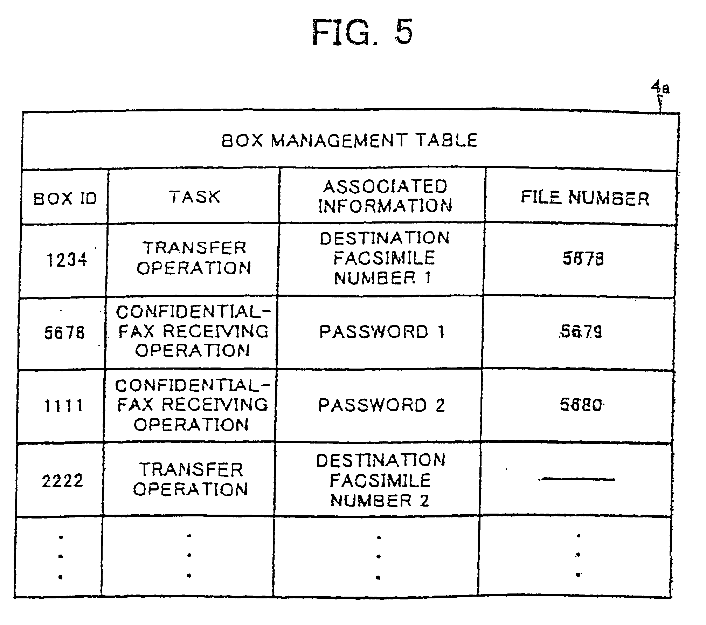

Referring to Fig. 5, the box management table 4a is explained. As shown in Fig. 5, the box management table 4a includes a plurality of records including four information fields of a box ID (identification), a task, associated information, and the file number. The box ID represents a number for identifying each box. The task represents an operation required to be performed relative to an image information file which is associated with a box identified by the box ID. The associated information represents information necessary for the operation specified in the task field when the specified operation is performed relative to an image information file which is associated with a box identified by the box ID. The file number is associated with each box.

Data registration to each of the information fields of the box ID, the operation, and the associated information is previously performed with the display panel unit 9. Data registration to the information field of the file number is performed through a facsimile-receiving operation, later explained. The registered file number is canceled through a file management operation, later explained.

In the example being explained, it is assumed that the operation specified in the task field in the box management table 4a is either a transfer operation or a confidential-facsimile receiving operation, for example. When a box is associated with the transfer operation as the task, the box is provided with a destination telephone number in the associated information field. A box associated with the confidential-facsimile receiving operation is provided with a password for identifying a specific user in the associated information field.

The task information field of the box management table 4a shown in Fig. 5 is not limited to the transfer operation and the facsimile receiving operation but also other operations. In addition, the number of the information fields of the box management table 4a of Fig. 5 is not bound to two and may be any number.

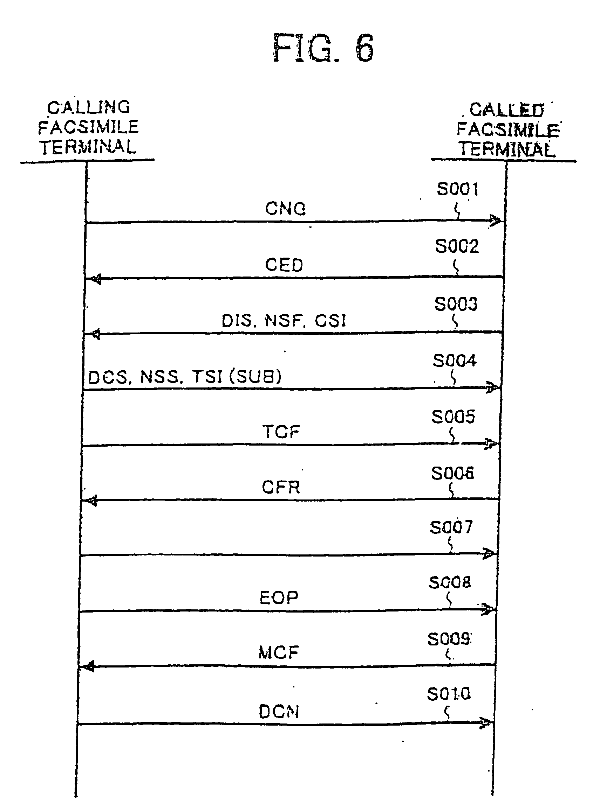

Next, a Group-3 facsimile communications sequence accompanied with a sub-address signal SUB is explained with Fig. 6. Fig. 4 shows a Group-3 facsimile transmission sequence for sending a facsimile image from a calling terminal (i.e., the facsimile apparatus 1) to a called terminal (i.e., a different facsimile machine). To connect a line between the calling facsimile terminal and the called facsimile terminal, the calling facsimile terminal initiates a call to the called facsimile terminal. Upon a connection of the line, in Step S001, the calling facsimile terminal sends a CNG (calling tone) signal to the called facsimile terminal in order to identify the calling facsimile terminal itself as a facsimile machine. In Step S002, the called facsimile terminal responds to it by sending a CED (called station identification) back to the calling facsimile terminal to identify the called facsimile terminal itself as a facsimile machine. Then, in Step S003, the called facsimile terminal sends DIS (digital identification signal), NSF (non-standard facilities), and CSI (called station identification) to the calling facsimile terminal. In Step S004, the calling facsimile terminal sends DCS (digital command signal), NSS (non-standard facilities set-up), TSI (transmitting subscriber identification), and SUB (sub-address) to the called facsimile terminal. Under the conditions in that the 49th bit of FIF (facsimile information field) in the DIS signal sent in Step S003 is set and the called facsimile terminal is capable to perform the communications with a sub-address designation using a SUB signal, when a sub-address is designated before the call initiating operation, the SUB signal sent in Step S004 includes the designated sub-address in the information field thereof. Thereby, the calling facsimile terminal determines various communications parameters.

Then, in Step S005, the calling facsimile terminal sends TCF (training check) to the called facsimile terminal to perform a modem training operation at a modem speed which is used for the transmission of the facsimile image information. After a successful completion of the modem training operation, in Step S006, the called facsimile terminal returns CFR (confirmation to receive) to the calling facsimile terminal so as to indicate that the called facsimile terminal becomes ready to receive facsimile image information. Upon receiving CFR from the called facsimile terminal, in Step S007, the calling facsimile terminal starts to send to the called facsimile terminal a facsimile message signal that includes facsimile image information. The facsimile message signal may be of binary data to be sent with a BFT (binary file transfer) which is an optional function to the Group-3 facsimile procedure. Then, after completing the facsimile message signal, in Step S008, the calling facsimile terminal sends an EOP (end of procedure) for indicating the end of the transmission procedure to the called facsimile terminal.

In response to EOP, the called facsimile terminal sends MCF (message confirmation) back to the calling facsimile terminal, in Step S009. Upon receiving MCF, in Step S010, the calling facsimile terminal sends DCN (disconnect) for commanding disconnection of the line to the called facsimile terminal. Then, both calling facsimile terminal and called facsimile apparatus 100 disconnect the line so as to end the communications session and to release the telephone line.

In this way, the calling facsimile terminal notifies a called facsimile terminal of SUB on a needed basis during the facsimile transmission so that the called facsimile terminal can register the received facsimile message associated with the sub-address notified and performs a requisite operation relative to the received facsimile message.

In the example being explained, the sub-address signal SUB defined by the recommendation T-30 of ITU-T (International Telecommunication Union -T) is used to specify a box ID.

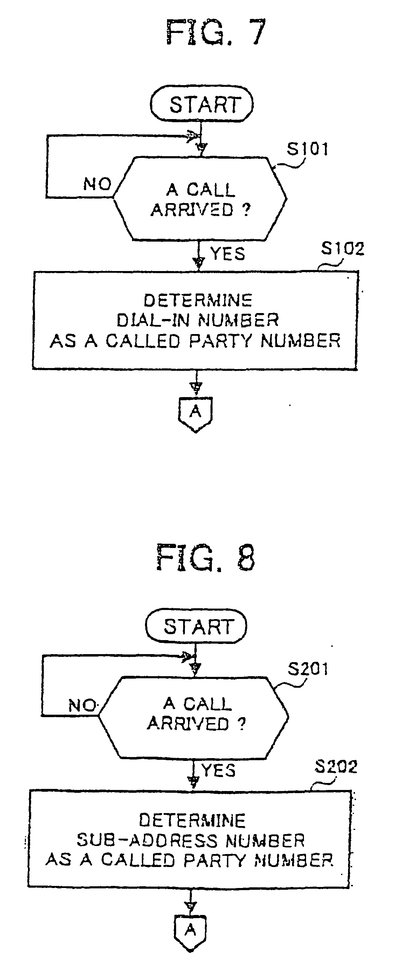

Referring to Figs. 7 - 9, an exemplary procedure of the facsimile receiving operation performed by the facsimile apparatus 1 is explained. Fig. 7 shows a case in which the facsimile apparatus 1 is connected to the ISDN under a dial-in contract, wherein the facsimile apparatus 1 is informed of a dial-in number at a receipt of a call and detects this dial-in number as a called party number. Fig. 8 shows another case in which the facsimile apparatus 1 is informed of an ISDN sub-address at a receipt of a call and detects this ISDN sub-address as a called party number.

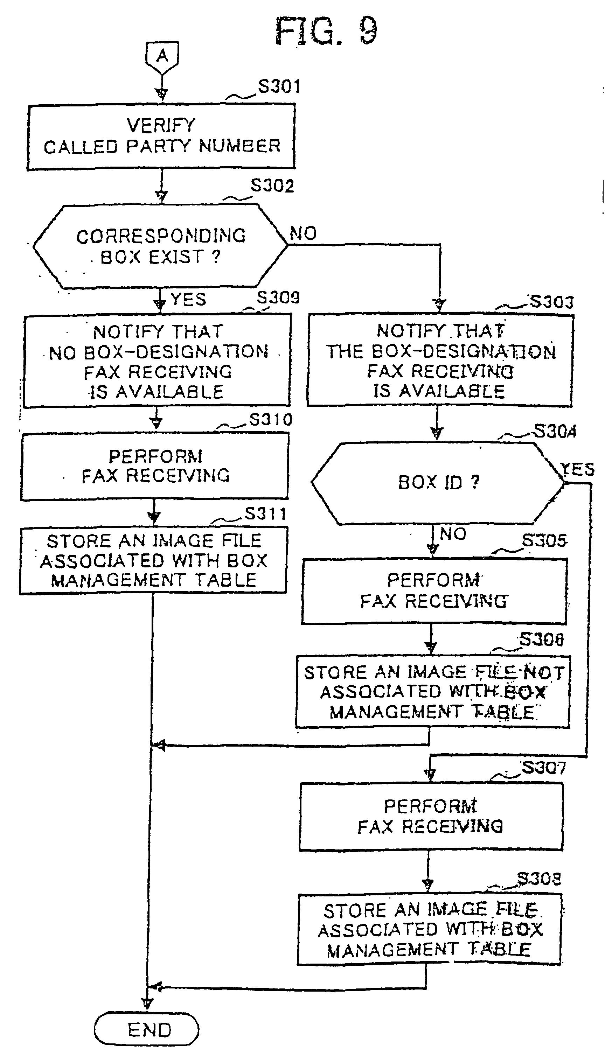

In Step S101 of Fig. 7, the system controller 2 checks if a call from a different facsimile apparatus arrives. If a call from a different facsimile apparatus arrives and the check result of Step S101 is YES, the system controller 2 detects a dial-in number and determines it as a called party number, in Step S102. Then, the system controller 2 proceeds to Step S301 (Fig. 9), explained later.

In Step S201 of Fig. 8, the system controller 2 checks if a call from a different facsimile apparatus arrives. If a call from a different facsimile apparatus arrives and the check result of Step S201 is YES, the system controller 2 in Step S202 detects an ISDN sub-address and determines it as a called party number. Then, the system controller 2 proceeds to Step S301 (Fig. 9), explained later.

The facsimile receiving procedures of Figs. 7 and 8 can be applied also to other cases where the facsimile terminal is connected to the PSTN.

Other type of information than the dial-in number and the ISDN sub-address sent to the facsimile apparatus 1 in an in-band process during a call process may be used. That is, the facsimile apparatus 1 can detect a type of information which is sent to the facsimile apparatus 1 in an out-band process during the call process to designate a destination facsimile number and determine it as a called party number.

After the operation of Fig. 7 or Fig. 8, the process proceeds to Step S301 of Fig. 9. In Step S301, the system controller 2 verifies the detected called party number against the box management table 4a to find a box ID corresponding to the detected called party number. In Step S302, the system controller 2 checks if there is a box ID corresponds to the detected called party number. If there exists a box ID corresponds to the detected called party number and the check result of Step S302 is YES, the process proceeds to Step S309 and the system controller 2 performs a pre-communications-procedure, as shown in Fig. 6. In the pre-communications-procedure, the system controller 2 resets the 49th bit of the DIS signal so as to notify the calling facsimile terminal that the called facsimile terminal has no box-designation facsimile receiving function. Thereby, the box designation by the sub-address SUB from the calling facsimile terminal is not made effective when a box is designated by the called party number. This avoids an event in that the box designated by the called party number is again designated by the sub-address SUB sent from the calling facsimile terminal. That is, the facsimile apparatus 1 can avoids such a problem that the received image information is transferred to a facsimile machine having according to the called party number and the same received image information is regarded as a confidential-facsimile message.

Then, in Step S310 of Fig. 9, the system controller 2 performs the facsimile receiving operation for receiving facsimile message information in the sequence as shown in Fig. 6. After that, in Step S311, the system controller 2 registers and stores the received image information as an image information file associated with the box ID corresponding to the detected called party number. More specifically, the system controller 2 sets the box flag of the image information file shown in Fig. 4 to 1, stores the image information file into the image memory 14, and registers the file number given to the stored image information file into the file number field associated with the box ID, corresponding to the detected called party number, in the box management table 4a. Then, the process ends.

If there exists no box ID corresponds to the detected called party number and the check result of Step S302 is NO, the process proceeds to Step S303 in which the system controller 2 performs the pre-communications-procedure, as shown in Fig. 6. In the pre-communications-procedure, the system controller 2 sets the 49th bit of the DIS signal so as to notify the calling facsimile terminal that the called facsimile terminal has a box-designation facsimile receiving function. Thereby, the box designation by the sub-address SUB from the calling facsimile terminal is made effective when no box is designated by the called party number.

Then, in Step S304, the system controller 2 checks if the sub-address SUB sent from the calling facsimile terminal specifies a box ID. If the sub-address SUB sent from the calling facsimile terminal specifies no box ID and the check result of Step S304 is NO, the process proceeds to Step S305 in which the system controller 2 performs the facsimile receiving operation for receiving a facsimile message of image information in the sequence as shown in Fig. 6. Then, in Step S306, the system controller 2 stores the received facsimile message into the image memory 14 as the image information file having the box flag of 0, that is, having no corresponding box ID.

If the sub-address SUB sent from the calling facsimile terminal specifies a box ID and the check result of Step S304 is YES, the process proceeds to Step S307 in which the system controller 2 performs the facsimile receiving operation for receiving a facsimile message of image information in the sequence as shown in Fig. 6.

After that, in Step S308, the system controller 2 registers and stores the received image information as an image information file associated with the box ID corresponding to the called party number specified by the sub-address SUB sent from the calling facsimile terminal. More specifically, the system controller 2 sets the box flag of the image information file shown in Fig. 4 to 1, stores the image information file into the image memory 14, and registers the file number given to the stored image information file into the file number field associated with the box ID corresponding to the called party number, specified by the sub-address SUB, in the box management table 4a. Then, the process ends.

As an alternative, the system controller 1 may send the information indicating that it has no box-designation facsimile receiving function, through the pre-communications-procedure to the calling facsimile terminal, when there exists no box ID corresponds to the detected called party number and the check result of Step S302 is NO. Thereby, the boxes registered in the facsimile apparatus 1 cannot remotely be designated from the calling facsimile terminal. In this case, the facsimile apparatus 1 can be caused to perform the transfer function and the confidential-facsimile receiving function only when the called party number sent from the calling facsimile machine matches with one of the box IDs in the box management table 4a and the check result of Step S302 is YES.

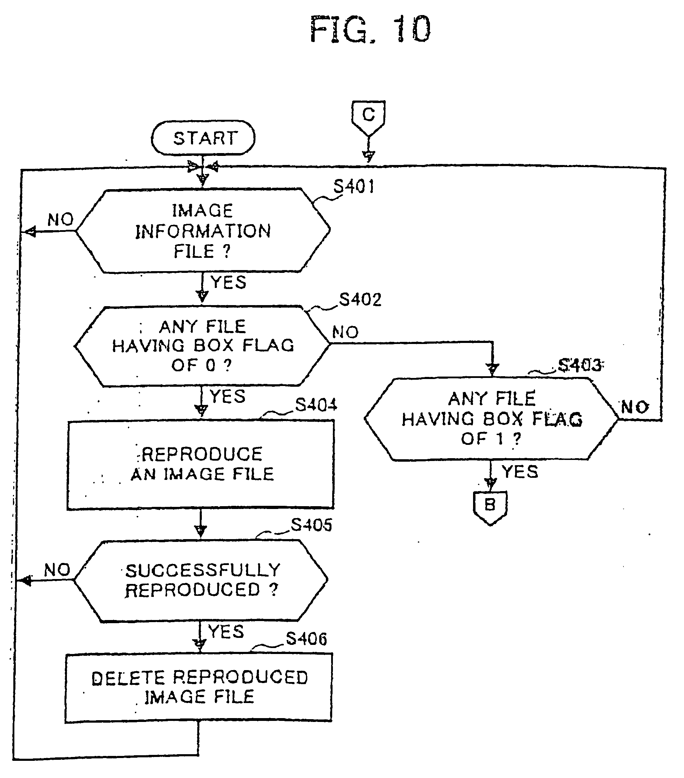

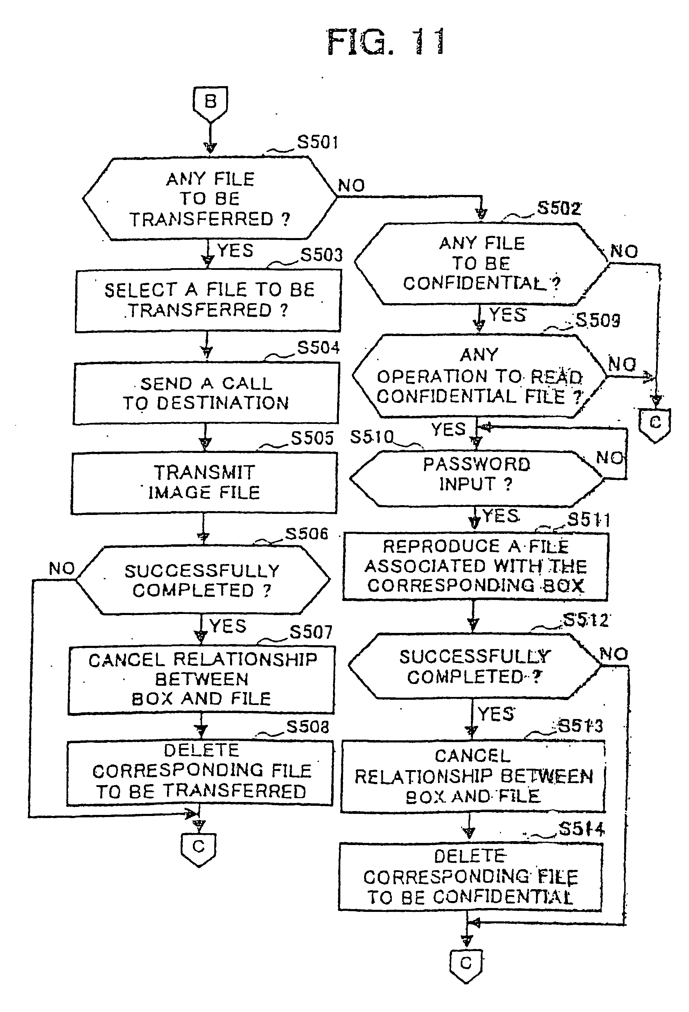

Next, an exemplary procedure of the file management operation performed by the facsimile apparatus 1 relative to the image information files stored in the image memory 14 is explained with reference to Figs. 10 and 11. Through a NO loop of Step S401 of Fig. 10, the system controller 2 checks if there is any image information file which is not yet treated in the image memory 14. If the system controller 2 finds an non-treated image information file in the image memory 14 and the check result of S401 is YES, the system controller 2 further checks in Step S402 if any image information file which has the box flag set to 0. If the system controller 2 finds an image information file having the box flag set to 0 and the check result of Step S402 is YES, the process proceeds to Step S404.

In Step S404, the system controller 2 reads the image information from the image information file found as having the box flag set to 0 and reproduces the read image information on a recording sheet with the printer 6. After that, in Step S405, the system controller 2 checks if the reproduction of the image information is successfully completed without causing problems such as jamming or running-out of the recording sheets. If the image information is not successfully completed and the check result of Step S405 is NO, the system controller 2 returns the process to Step S401 to repeat the same procedure. If the image information is successfully completed and the check result of Step S405 is YES, the process proceeds to Step S406 in which the system controller 2 deletes the image information file reproduced in Step S404 from the image memory 14. Then, the process returns to Step S401.

Thus, the image information received through the regular facsimile receiving operation which is performed in Step S306 of Fig. 9 is in turn reproduced on a recording sheet with the printer 6 subsequently after the facsimile receiving operation.

If the system controller 2 finds no image information file having the box flag set to 0 and the check result of Step S402 is NO, the process proceeds to Step S403. In Step S403, the system controller 2 checks if there is an image information file having the box flag set to 1. If no image information file having the box flag set to 1 exists and the check result of Step S403 is NO, the process returns to Step S401. But, if the system controller 2 finds an image information file having the box flag set to 1 and the check result of Step S403 is YES, the process returns to Step S501 of Fig. 11.

In Step S501 of Fig. 11, the system controller 2 checks if there is at least one image information file requesting for the transfer operation. More specifically, the system controller 2 checks if there is any box in the box management table 4a in which the transfer operation is registered in the task field and if in such a box there is any image information file having the file number registered in the file number field. If the system controller 2 finds at least one image information file requesting the transfer operation and the check result of Step S501 is YES, the process proceeds to Step S503 in which the system controller 2 selects one of the boxes containing the image information file requesting the transfer operation. In Step S504, the system controller 2 initiates a call to a destination facsimile machine using the destination facsimile number registered in the associated information field. Then, in Step S505, the system controller 2 reads image information specified by the file number registered in the file number field of the selected box and transmits the read image information to the destination facsimile machine.

In Step S506, the system controller 2 checks if the transmission operation is successfully performed without causing problems such as a communications error. If the transmission operation is not successfully performed and the check result of Step S506 is NO, the process returns to Step S401 of Fig. 10. But, if the transmission operation is successfully performed and the check result of Step S506 is YES, the system controller 2 deletes the file number of the image information file successfully transmitted in Step S505 from the file number field of the selected box so as to cancel the linkage between the selected box and the image information file, in Step S507. Then, in Step S508, the system controller 2 deletes the image information file transmitted in Step S505 from the image memory 14. Then, the process returns to Step S401 of Fig. 10.

Thus, the facsimile apparatus 1 can transfer the image information associated with a box having the task field registered as the transfer operation to a destination facsimile machine using a destination facsimile number specified by the information registered in the associated information field of the box.

If the system controller 2 finds no image information file requesting the transfer operation and the check result of Step S501 is NO, the process proceeds to Step S502 in which the system controller 2 checks if there is an image information file requesting to be handled as a confidential facsimile message. More specifically, the system controller 2 checks if there is any box in the box management table 4a in which the confidential-facsimile receiving operation is registered in the task field and if in such a box there is any image information file having the file number registered in the file number field. If the system controller 2 finds no image information file requesting the confidential-facsimile receiving operation and the check result of Step S502 is NO, the process returns to Step S401 of Fig. 10.

If the system controller 2 finds at least one image information file requesting the confidential-facsimile receiving operation and the check result of Step S502 is YES, the process proceeds to Step S509 in which the system controller 2 checks if a predetermined operation for reading the confidential facsimile message is performed through the display panel unit 9. If such a predetermined operation for reading the confidential facsimile message is not performed and the check result of Step S509 is NO, the process returns to Step S401 of Fig. 10. But, if the predetermined operation for reading the confidential facsimile message is performed and the check result of Step S509 is YES, the system controller 2 further checks through a NO loop of Step S510 if a password is entered through the display panel unit 9. If the password is entered and the check result of Step S510 is YES, the process proceeds to Step S511 in which the system controller 2 reproduces image information associated with the password in the box management table 4a on a recording sheet with the printer 6. More specifically, the system controller 2 verifies the password with the box management table 4a to find a box of which task field is registered as the confidential-facsimile receiving operation, reads image information from an image information file registered in such a box, and causes the printer 6 to print the read image information.

Then, in Step S512, the system controller 2 checks if the reproduction of the read image information is successfully performed without causing any problem such as jamming or running-out of the recording sheets. If the reproduction of the read image information is not successfully performed and the check result of Step S512 is NO, the process returns to Step S401 of Fig. 10. If the reproduction of the read image information is successfully performed and the check result of Step S512 is YES, the process proceeds to Step S513 and the system controller 2 deletes the file number of the image information file reproduced in Step S511 from the file number field of the associated box so as to cancel the linkage between the associated box and the image information file reproduced in Step S511. Then, in Step S514, the system controller 2 deletes the corresponding confidential facsimile file from the image memory 14. After that, the process returns to Step S401 of Fig. 10.

In this way, the facsimile apparatus 1 can allow a user to obtain a reproduction of an image information file associated with a box having the task field registered as a confidential-facsimile receiving operation in the box management table 4a by entering a password which matches with the password registered in the associated information field of the above-mentioned box.

Although in the above-described example the present invention is applied to a facsimile communications system in which a SUB signal, a standard signal according to the Group-3 facsimile procedure, is used to notify a box number, the present invention may also be applied to other communications systems in which non-standard control signal, for example, is used to notify a box number.

Further, in the above-described example, the present invention is applied to a facsimile apparatus performing a communications operation for communicating an image information. However, the present invention is not limited to the contents of the communication nor the communications protocols.

In addition, the present invention can be applied to a communications system which is able to notify a number for specifying a box within a communications procedure associated with a transmission of data and which is able to receive a number for designating a box out of a communications procedure associated with a data receiving operation.

This invention may be conveniently implemented using a conventional general purpose digital computer programmed according to the teaching of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

Numerous additional modifications and variations of the present application are possible in light of the above teachings. It is therefore to be understood that within the scope of the appended claims, the present application may be practiced otherwise than as specifically described herein.

## Claims

1. A communications terminal for connection to a communications network, the terminal comprising:
a communications mechanism for responding to a call initiation made by a calling communications terminal connected to said communications network and, after such a response, to perform a communications operation through a predetermined communications procedure relative to said calling communications terminal;
a first memory for storing communications data sent from said calling communications terminal during said communications operation, said communications data being provided with a file number for specifying said communications data;
a second memory for storing a plurality of information boxes, each information box including a box number field that previously registers a box number for identifying a box, a file number field that registers a file number specifying communications data sent from said calling communications terminal in association with said box, and a task information field that previously registers data representing a specific operation to be performed against said communications data specified by said file number, said box number being notified during said call initiation by said calling communications terminal using a signal for normally notifying a called party number;
a number detection mechanism for detecting a called party number sent from said calling communications terminal during said call initiation; and
a controlling mechanism for verifying said called party number sent from said calling communications terminal during said call initiation with box numbers throughout said plurality of information boxes stored in said second memory so as to determine whether said called party number matches with one of said box numbers and, when said called party number is determined as matching with one of said box numbers, to perform said specific operation registered in said task information field of a box specified by said one of said box numbers matched with said called party number against communications data specified by said file number associated with said box and which is stored in said first memory.

2. A communications terminal according to Claim 1, wherein said controlling mechanism is adapted, when said called party number is determined as not matching with one of said box numbers, to notify said calling communications terminal during said predetermined communications procedure after said call initiation that a communications operation involving a box designation process is available so as to allow an in-band box designation during said predetermined communications procedure by said calling communications terminal.

3. A communications terminal according to Claim 1 or 2, wherein said controlling mechanism is adapted, when said called party number is determined as matching with one of said box numbers, to notify said calling communications terminal during said predetermined communications procedure after said call initiation that a communications operation involving a box designation process is not available so as to prohibit an overlapping of box designation designated during said call initiation and during said predetermined communications procedure.

4. A communications terminal according to any one of the preceding claims, wherein said called party number includes a dial-in number.

5. A communications terminal according to any one of the preceding claims, wherein said called party number includes a sub-address of an integrated services digital network.

6. A communications terminal according to any one of the preceding claims, wherein said predetermined communications procedure includes a Group-3 facsimile communications procedure.

7. A communications terminal according to any one of the preceding claims, wherein said predetermined communications procedure includes a Group-4 facsimile communications procedure.

8. A communications terminal according to any one of the preceding claims, wherein said network includes a public switched telephone network.

9. A communications terminal according to any one of the preceding claims, wherein said network includes an integrated services digital network.

10. A communications terminal according to any one of the preceding claims, wherein said network includes a local area network.

11. A method for data communication, comprising the steps of:
registering a plurality of information boxes, each information box including a box number field that previously registers a box number for identifying a box, a file number field that registers a file number for specifying communications data, and a task information field that previously registers data representing a specific operation to be performed against communications data specified by said file number;
detecting a called party number during a call initiation made through a communications network by a calling communications terminal connected to said communications network;
verifying said called party number sent from said calling communications terminal during said call initiation with box numbers throughout said plurality of information boxes so as to determine whether said called party number matches with one of said box numbers;
storing communications data received during a communications operation through a predetermined communications procedure subsequent to said call initiation made by said calling communications terminal;
providing said communications data stored by said storing step with a file number when said called party number is determined as matching with one of said box numbers;
registering said file number provided by said providing step into said file number field of a box specified by said one of said box numbers; and
performing said specific operation registered in said task information field of said box specified by said one of said box numbers matched with said called party number against communications data specified by said file number registered by said registering step.

12. A method as defined in Claim 11, further comprising a notifying step for notifying said calling communications terminal during said predetermined communications procedure after said call initiation that a communications operation involving a box designation process is available so as to allow an in-band box designation during said predetermined communications procedure by said calling communications terminal when said called party number is determined as not matching with one of said box numbers.

13. A method as defined in Claim 11, further comprising a notifying step for notifying said calling communications terminal during said predetermined communications procedure after said call initiation that a communications operation involving a box designation process is not available so as to prohibit an overlapping of box designation designated during said call initiation and during said predetermined communications procedure when said called party number is determined as matching with one of said box numbers.

14. A method as defined in claim 11, 12 or 13, wherein said called party number includes a dial-in number.

15. A method according to any one of claims 11 to 14, wherein said called party number includes a sub-address of an integrated services digital network.

16. A method according to any one of claims 11 to 15, wherein said predetermined communications procedure includes a Group-3 facsimile communications procedure.

17. A method according to any one of claims 11 to 16, wherein said predetermined communications procedure includes a Group-4 facsimile communications procedure.

18. A method according to any one of claims 11 to 17, wherein said communications network includes a public switched telephone network.

19. A method according to any one of claims 11 to 18, wherein said communications network includes an integrated services digital network.

20. A method according to any one of claims 11 to 19, wherein said communications network includes a local area network.

21. A computer readable medium storing computer instructions for performing the steps recited in anyone of Claims 11 to 20.

## Patentansprüche

1. Kommunikationsendgerät für die Verbindung mit einem Kommunikationsnetz, wobei das Endgerät umfasst:
einen Kommunikationsmechanismus, um auf eine Anrufeinleitung zu warten, die von einem mit dem Kommunikationsnetz verbundenen anrufenden Kommunikationsendgerät gemacht wird, und um nach einer solchen Antwort eine Kommunikationsoperation über eine mit dem anrufenden Kommunikationsendgerät in Beziehung stehende vorgegebene Kommunikationsprozedur auszuführen;
einen ersten Speicher, um Kommunikationsdaten zu speichern, die während der Kommunikationsoperation von dem anrufenden Kommunikationsendgerät geschickt werden, wobei die Kommunikationsdaten mit einer Dateinummer versehen sind, um die Kommunikationsdaten zu spezifizieren;
einen zweiten Speicher, um mehrere Informationszonen zu speichern, wobei jede Informationszone ein Zonennummernfeld, das im Voraus eine Zonennummer für die Identifizierung einer Zone aufzeichnet, ein Dateinummernfeld, das eine Dateinummer aufzeichnet, die Kommunikationsdaten spezifiziert, die von dem anrufenden Kommunikationsendgerät in Zuordnung zu der Zone geschickt werden, und ein Task-Informationsfeld, das im Voraus Daten aufzeichnet, die eine bestimmte Operation darstellen, die an den durch die Dateinummer spezifizierten Kommunikationsdaten auszuführen ist, umfasst, wobei die Zonennummer während der Anrufeinleitung durch das anrufende Kommunikationsendgerät unter Verwendung eines Signals, mit dem normalerweise eine angerufene Teilnehmernummer gemeldet wird, gemeldet wird;
einen Nummernerfassungsmechanismus, um eine von dem anrufenden Kommunikationsendgerät während der Anrufeinleitung geschickte angerufene Teifnehmernummer zu erfassen; und
einen Kontrollmechanismus, um die angerufene Teilnehmernummer, die von dem anrufenden Kommunikationsendgerät während der Anrufeinleitung geschickt wird, mit Zonennummern aller der mehreren Informationszonen, die in dem zweiten Speicher gespeichert sind, zu verifizieren, um so festzustellen, ob die angerufene Teilnehmernummer mit einer der Zonennummern übereinstimmt, und um dann, wenn festgestellt wird, dass die angerufene Teilnehmernummer mit einer der Zonennummern übereinstimmt, um an Kommunikationsdaten, die durch die Dateinummer spezifiziert sind, die der Zone zugeordnet ist und die in dem ersten Speicher gespeichert ist, die bestimmte Operation auszuführen, die in dem Task-Informationsfeld einer durch die eine der Zonennummern bestimmten Zone, die mit der angerufenen Teilnehmernummer übereinstimmt, aufgezeichnet ist.

2. Kommunikationsendgerät nach Anspruch 1, bei der der Kontrollmechanismus so beschaffen ist, dass er, wenn festgestellt wird, dass die angerufene Teilnehmernummer nicht mit einer der Zonennummern übereinstimmt, dem anrufenden Kommunikationsendgerät während der vorgegebenen Kommunikationsprozedur nach der Anrufeinleitung meldet, dass eine Kommunikationsoperation, die einen Zonenbezeichnungsprozess umfasst, verfügbar ist, um eine Inband-Zonenbezeichnung während der vorgegebenen Kommunikationsprozedur durch das anrufende Kommunikationsendgerät zu ermöglichen.

3. Kommunikationsendgerät nach Anspruch 1 oder 2, bei dem der Kontrollmechanismus so beschaffen ist, dass er dann, wenn festgestellt wird, dass die angerufene Teilnehmernummer mit einer der Zonennummern übereinstimmt, dem anrufenden Kommunikationsendgerät während der vorgegebenen Kommunikationsprozedur nach der Anrufeinleitung meldet, dass eine Kommunikationsoperation, die einen Zonenbezeichnungsprozess umfasst, nicht verfügbar ist, um eine Überlappung der während der Anrufeinleitung angegebenen Zonenbezeichnung und der während der vorgegebenen Kommunikationsprozedur angegebenen Zonenbezeichnung zu verhindern.

4. Kommunikationsendgerät nach einem der vorhergehenden Ansprüche, bei der die angerufene Teilnehmernummer eine Einwählnummer umfasst.

5. Kommunikationsendgerät nach einem der vorhergehenden Ansprüche, bei dem die angerufene Teilnehmernummer eine Unteradresse eines dienstintegrierenden digitalen Nachrichtennetzes umfasst.

6. Kommunikationsendgerät nach einem der vorhergehenden Ansprüche, bei dem die vorgegebene Kommunikationsprozedur eine Gruppe-3-Telefax-Kommunikationsprozedur umfasst.

7. Kommunikationsendgerät nach einem der vorhergehenden Ansprüche, bei dem die vorgegebene Kommunikationsprozedur eine Gruppe-4-Telefax-Kommunikationsprozedur umfasst.

8. Kommunikationsendgerät nach einem der vorhergehenden Ansprüche, bei dem das Netz ein öffentliches Telephonvermittlungsnetz umfasst.

9. Kommunikationsendgerät nach einem der vorhergehenden Ansprüche, bei dem das Netz ein dienstintegrierendes digitales Nachrichtennetz umfasst.

10. Kommunikationsendgerät nach einem der vorhergehenden Ansprüche, bei dem das Netz ein Nahbereichsnetz umfasst.

11. Verfahren zur Datenkommunikation, das die folgenden Schritte umfasst:
Aufzeichnen mehrerer Informationszonen, wobei jede Informationszone ein Zonennummernfeld, das im Voraus eine Zonennummer zum Identifizieren einer Zone aufzeichnet, ein Dateinummernfeld, das eine Dateinummer aufzeichnet, um Kommunikationsdaten zu spezifizieren, und ein Task-Informationsfeld, das im Voraus Daten aufzeichnet, die eine an den durch die Dateinummer spezifizierten Kommunikationsdaten auszuführende bestimmte Information darstellen, umfasst;
Erfassen einer angerufenen Teilnehmernummer während einer Anrufeinleitung, die über ein Kommunikationsnetz durch ein mit dem Kommunikationsnetz verbundenes anrufendes Kommunikationsendgerät gemacht wird;
Verifizieren der angerufenen Teilnehmernummer, die von dem anrufenden Kommunikationsendgerät während der Anrufeinleitung geschickt wird, mit Zonennummern aller der mehreren Informationszonen, um so festzustellen, ob die angerufene Teilnehmernummer mit einer der Zonennummern übereinstimmt;
Speichern von Kommunikationsdaten, die während einer Kommunikationsoperation über eine vorgegebene Kommunikationsprozedur nach der durch das anrufende Kommunikationsendgerät gemachten Anrufeinleitung empfangen werden;
Versehen der Kommunikationsdaten, die in dem Speicherschritt gespeichert werden, mit einer Dateinummer, wenn festgestellt wird, dass die angerufene Teilnehmernummer mit einer der Zonennummern übereinstimmt;
Aufzeichnen der Dateinummer, die durch den Schritt des Versehens vorgesehen wird, in dem Dateinummernfeld einer Zone, die durch eine der Zonennummern spezifiziert wird; und
Ausführen der bestimmten Operation, die in dem Task-Informationsfeld der Zone aufgezeichnet ist, die durch die eine der Zonennummern spezifiziert ist, die mit der angerufenen Teilnehmernummer übereinstimmt, an Kommunikationsdaten, die durch die in dem Aufzeichnungsschritt aufgezeichnete Dateinummer spezifiziert sind.

12. Verfahren nach Anspruch 11, das ferner einen Meldeschritt umfasst, um dem anrufenden Kommunikationsendgerät während der vorgegebenen Kommunikationsprozedur nach der Anrufeinleitung zu melden, dass eine Kommunikationsoperation, die einen Zonenbezeichnungsprozess umfasst, verfügbar ist, um während der vorgegebenen Kommunikationsprozedur durch das anrufende Kommunikationsendgerät eine Inband-Zonenbezeichnung zuzulassen, wenn festgestellt wird, dass die angerufene Teilnehmernummer nicht mit einer der Zonennummern übereinstimmt.

13. Verfahren nach Anspruch 11, das ferner einen Meldeschritt umfasst, um dem anrufenden Kommunikationsendgerät während der vorgegebenen Kommunikationsprozedur nach der Anrufeinleitung zu melden, dass eine Kommunikationsoperation, die einen Zonenbezeichnungsprozess umfasst, nicht verfügbar ist, um so eine Überlappung einer während der Anrufeinleitung angegebenen Zonenbezeichnung und einer während der vorgegebenen Kommunikationsprozedur angegebenen Zonenbezeichnung zu verhindern, wenn festgestellt wird, dass die angerufene Teilnehmernummer mit einer der Zonennummern übereinstimmt.

14. Verfahren nach Anspruch 11, 12 oder 13, bei dem die angerufene Teilnehmernummer eine Einwählnummer umfasst.

15. Verfahren nach einem der Ansprüche 11 bis 14, bei dem die angerufene Teilnehmernummer eine Unteradresse eines dienstintegrierenden digitalen Nachrichtennetzes umfasst.

16. Verfahren nach einem der Ansprüche 11 bis 15, bei dem die vorgegebene Kommunikationsprozedur eine Gruppe-3-Telefax-Kommunikationsprozedur umfasst.

17. Verfahren nach einem der Ansprüche 11 bis 16, bei dem die vorgegebene Kommunikationsprozedur eine Gruppe-4-Telefax-Kommunikationsprozedur umfasst.

18. Verfahren nach einem der Ansprüche 11 bis 17, bei dem das Kommunikationsnetz ein öffentliches Telephonvermittlungsnetz umfasst.

19. Verfahren nach einem der Ansprüche 11 bis 18, bei dem das Kommunikationsnetz ein dienstintegrierendes digitales Nachrichtennetz umfasst.

20. Verfahren nach einem der Ansprüche 11 bis 19, bei dem das Kommunikationsnetz ein Nahbereichsnetz umfasst.

21. Computerlesbares Medium, das Computeranweisungen speichert, um die in einem der Ansprüche 11 bis 20 angegebenen Schritte auszuführen.

## Revendications

1. Terminal de communication pour une connexion sur un réseau de communication, le terminal comprenant :
un mécanisme de communication pour répondre à une initiation d'appel qui est réalisée par un terminal de communication appelant qui est connecté audit réseau de communication et, après une telle réponse, pour réaliser une opération de communication par l'intermédiaire d'une procédure de communication prédéterminée en relation avec ledit terminal de communication appelant ;
une première mémoire pour stocker des données de communication qui sont envoyées depuis ledit terminal de communication appelant pendant ladite opération de communication, lesdites données de communication étant munies d'un numéro de fichier pour spécifier lesdites données de communication ;
une seconde mémoire pour stocker une pluralité de boîtes d'information, chaque boîte d'information incluant une zone de numéro de boîte qui enregistre de façon préalable un numéro de boîte pour identifier une boîte, une zone de numéro de fichier qui enregistre un numéro de fichier qui spécifie des données de communication qui sont envoyées depuis ledit terminal de communication appelant en association avec ladite boîte et une zone d'information de tâche qui enregistre de façon préalable des données qui représentent une opération spécifique qui est destinée à être réalisée en relation avec lesdites données de communication qui sont spécifiées par ledit numéro de fichier, ledit numéro de boîte étant notifié pendant ladite initiation d'appel par ledit terminal de communication appelant en utilisant un signal pour notifier normalement un numéro de partie appelée ;
un mécanisme de détection de numéro pour détecter un numéro de partie appelée qui est envoyé depuis ledit terminal de communication appelant pendant ladite initiation d'appel ; et
un mécanisme de commande pour vérifier ledit numéro de partie appelée qui est envoyé depuis ledit terminal de communication appelant pendant ladite initiation d'appel en relation avec des numéros de boîte sur la totalité de ladite pluralité de boîtes d'information comme stocké dans ladite seconde mémoire de manière à déterminer si oui ou non ledit numéro de partie appelée correspond à l'un desdits numéros de boîte et lorsque ledit numéro de partie appelée est déterminé comme correspondant à l'un desdits numéros de boîte, pour réaliser ladite opération spécifique qui est enregistrée dans ladite zone d'information de tâche d'une boîte spécifiée au moyen dudit un desdits numéros de boîte qui est en correspondance avec ledit numéro de partie appelée en relation avec les données de communication qui sont spécifiées par ledit numéro de fichier qui est associé à ladite boîte et qui est stocké dans ladite première mémoire.

2. Terminal de communication selon la revendication 1, dans lequel ledit mécanisme de commande est adapté, lorsque ledit numéro de partie appelée est déterminé comme ne correspondant pas à l'un desdits numéros de boîte, pour notifier audit terminal de communication appelant pendant ladite procédure de communication prédéterminée après ladite initiation d'appel qu'une opération de communication qui met un jeu un processus de désignation de boîte est disponible de manière à permettre une désignation de boîte dans la bande pendant ladite procédure de communication prédéterminée au moyen dudit terminal de communication appelant.

3. Terminal de communication selon la revendication 1 ou 2, dans lequel ledit mécanisme de commande est adapté, lorsque ledit numéro de partie appelée est déterminé comme correspondant à l'un desdits numéros de boîte, pour notifier audit terminal de communication appelant pendant ladite procédure de communication prédéterminée après ladite initiation d'appel qu'une opération de communication qui met en jeu un processus de désignation de boîte n'est pas disponible de manière à empêcher un chevauchement de désignation de boîte comme désigné pendant ladite initiation d'appel et pendant ladite procédure de communication prédéterminée.

4. Terminal de communication selon l'une quelconque des revendications précédentes, dans lequel ledit numéro de partie appelée Inclut un numéro d'entrée par composition.

5. Terminal de communication selon l'une quelconque des revendications précédentes, dans lequel ledit numéro de partie appelée inclut une sous-adresse d'un réseau numérique à intégration de services.

6. Terminal de communication selon l'une quelconque des revendications précédentes, dans lequel ladite procédure de communication prédéterminée inclut une procédure de communication de facsimilé de groupe 3.

7. Terminal de communication selon l'une quelconque des revendications précédentes, dans lequel ladite procédure de communication prédéterminée inclut une procédure de communication de facsimilé de groupe 4.

8. Terminal de communication selon l'une quelconque des revendications précédentes, dans lequel ledit réseau inclut un réseau de téléphone commuté public.

9. Terminal da communication selon l'une quelconque des revendications précédentes, dans lequel ledit réseau inclut un réseau numérique à intégration de services.

10. Terminal de communication selon l'une quelconque des revendications précédentes, dans lequel ledit réseau inclut un réseau local.

11. Procédé pour une communication de données, comprenant les étapes de :
enregistrement d'une pluralité de boîtes d'information, chaque boîte d'information incluant une zone de numéro de boîte qui enregistre de façon préalable un numéro de boîte pour identifier une boîte, une zone de numéro de fichier qui enregistre un numéro de fichier pour spécifier dés données de communication et une zone d'information de tâche qui enregistre de façon préalable des données qui représentent une opération spécifique destinée à être réalisée en relation avec des données de communication qui sont spécifiées au moyen dudit numéro de fichier ;
détection d'un numéro de partie appelée pendant une initiation d'appel qui est réalisée par l'intermédiaire d'un réseau de communication par un terminal de communication appelant qui est connecté audit réseau de communication ;
vérification dudit numéro de partie appelée qui est envoyé depuis ledit terminal de communication appelant pendant ladite Initiation d'appel en relation avec des numéros de boîte sur la totalité de ladite pluralité de boîtes d'information de manière à déterminer si oui ou non ledit numéro de partie appelée correspond à l'un desdits numéros de boîte ;
stockage de données de communication qui sont reçues pendant une opération de communication par l'intermédiaire d'une procédure de communication prédéterminée qui fait suite à ladite Initiation d'appel qui est réalisée par ledit terminal de communication appelant ;
action consistant à munir lesdites données de communication qui sont stockées au moyen de ladite étape de stockage d'un numéro de fichier lorsque ledit numéro de partie appelée est déterminé comme correspondant à l'un desdits numéros de boîte ;
enregistrement dudit numéro de fichier, fourni au moyen de ladite étape consistant à munir, à l'intérieur de ladite zone de numéro de fichier d'une boîte qui est spécifiée au moyen dudit un desdits numéros de boîte ; et
réalisation de ladite opération spécifique qui est enregistrée dans ladite zone d'information de tâche de ladite boîte qui est spécifiée au moyen dudit un desdits numéros de boîte en correspondance avec ledit numéro de partie appelée en relation avec des données de communication qui sont spécifiées au moyen dudit numéro de fichier qui est enregistré au moyen de ladite étape d'enregistrement.

12. Procédé selon la revendication 11, comprenant en outre une étape de notification pour notifier audit terminal de communication appelant pendant ladite procédure de communication prédéterminée après ladite initiation d'appel qu'une opération de communication qui met en jeu un processus de désignation de boîte est disponible de manière à permettre une désignation de boîte dans la bande pendant ladite procédure de communication prédéterminée par ledit terminal de communication appelant lorsque ledit numéro de partie appelée est déterminé comme ne correspondant pas à l'un desdits numéros de boîte.

13. Procédé selon la revendication 11, comprenant en outre une étape de notification pour notifier audit terminal de communication appelant pendant ladite procédure de communication prédéterminée après ladite initiation d'appel le fait qu'une opération de communication qui met en jeu un processus de désignation de boîte n'est pas disponible de manière à empêcher un chevauchement de désignation de boîte comme désigné pendant ladite initiation d'appel et pendant ladite procédure de communication prédéterminée lorsque ledit numéro de partie appelée est déterminé comme correspondant à l'un desdits numéros de boîte.

14. Procédé selon la revendication 11, 12 ou 13, dans lequel ledit numéro de partie appelée inclut un numéro d'entrée par composition.

15. Procédé selon l'une quelconque des revendications 11 à 14, dans lequel ledit numéro de partie appelée inclut une sous-adresse d'un réseau numérique à intégration de services.

16. Procédé selon l'une quelconque des revendications 11 à 15, dans lequel ladite procédure de communication prédéterminée inclut une procédure de communication de facsimilé de groupe 3.

17. Procédé selon l'une quelconque des revendications 11 à 16, dans lequel ladite procédure de communication prédéterminée inclut une procédure de communication de facsimilé de groupe 4.

18. Procédé selon l'une quelconque des revendications 11 à 17, dans lequel ledit réseau de communication inclut un réseau de téléphone commuté public.

19. Procédé selon l'une quelconque des revendications 11 à 18, dans lequel ledit réseau de communication inclut un réseau numérique à intégration de services.

20. Procédé selon l'une quelconque des revendications 11 à 19, dans lequel ledit réseau de communication inclut un réseau local.

21. Support lisible par ordinateur qui stocke des instructions d'ordinateur pour réaliser les étapes selon l'une quelconque des revendications 11 à 20.
